# EUROPEAN PATENT SPECIFICATION

(11) **EP 1 510 672 B1**
(45) Date of publication and mention of the grant of the patent: **20.06.2012**
(21) Application number: 03019243.9
(22) Date of filing: 26.08.2003
(51) Int. Cl.: F01N 13/00, F01N 3/20, F01N 11/00, F02D 41/14

(54) **An oxygen sensor arrangement**
Sauerstoffsensorsystem
Arrangement de capteur d'oxygène

(43) Date of publication of application: 02.03.2005
(73) Proprietor: Volvo Car Corporation, 405 31 Göteborg (SE)
(72) Inventor: Laurell, Mats, 413 21 Göteborg (SE); Dahlgren, Jan, 423 39 Torslanda (SE)
(74) Representative: Spitmann, Knut Hermann

(56) References cited:
- EP-A- 0 604 868
- EP-A- 1 079 079
- US-A- 5 782 086
- US-A- 5 983 627
- PATENT ABSTRACTS OF JAPAN vol. 017, no. 136 (M-1384), 19 March 1993 (1993-03-19) & JP 04 314911 A (NGK INSULATORS LTD), 6 November 1992 (1992-11-06)
- PATENT ABSTRACTS OF JAPAN vol. 1996, no. 01, 31 January 1996 (1996-01-31) & JP 07 238823 A (TOYOTA MOTOR CORP;OTHERS: 02), 12 September 1995 (1995-09-12)

## Description

### TECHNICAL AREA

The present invention relates to a heating arrangement being arranged in a vehicle. The vehicle comprises a catalyst and at least one oxygen sensor arranged inside the catalyst as well. The heating arrangement comprises a heating element being arranged to provide a heating effect on at least a part of the areas inside the catalyst.

### BACKGROUND OF THE INVENTION

In conventional vehicles, the emission after treatment system generally comprises an exhaust manifold, a down-pipe and a catalyst. A first front oxygen sensor providing feedback data is generally arranged in the down-pipe for controlling the air-fuel mixture flowing into the engine. A second rear oxygen sensor is mounted into the catalyst for controlling the oxygen content of the inflowing exhausts thereto, and for calibrating the first oxygen sensor as well. This operation of the oxygen sensors is called "closed-loop-control".

In the-present-day-situation, it is customary that the emission system runs without any feedback from the front oxygen sensor during an initial time period of approximately ten seconds from a cold start since the oxygen sensors cannot operate until they are completely heated. The oxygen sensors are generally not preheated before the start-up of the internal combustion engine in order to avoid thermal chock. If the oxygen sensors were preheated they could crack. Therefore, the front oxygen sensor is heated from its internal heater element during said initial time period until the sensor is heated enough and the closed-loop-control can start.

In greater detail, water drops are formed by means of the condensation of water vapour existing on the cold exhaust pipe walls. When the water drops reach a certain size, or when the vehicle accelerates, the associated increase in mass flows through the vehicle, which can lead to that the water drops drip off and collides with the oxygen sensor. In time, this phenomenon may lead to the destruction of the oxygen sensor.

The main part of the emissions from today's vehicles descends from cold starts and the mentioned initial time periods from the cold starts when the closed-loop-control isn't in operation. Consequently, it is desirable to reduce the time of the cold starts and the initial time periods for reducing emissions.

Oxygen sensors provided with internal heating elements for heating the sensors during the mentioned initial time period are well-known.

Electrically heated catalysts (EHC) arranged in vehicles are well-known as well. However, the object in these cases is to obtain quickly heated catalysts for acquiring an improved catalytic performance during the initial heating phase of the catalyst such as the conversion capacity of the emissions and the oxygen storage capacity (OSC) of the catalyst. Some car manufacturers have already introduced electrically heated catalysts in production. However, a major disadvantage with those systems is that the emission levels from those vehicles depend on the battery. Hence the battery is an emission-related component (ERC), and the battery can thereby be included in very complex warranty obligations.

In JP 7238823 A an emission system comprising a local electric heater for the catalyst is shown. In greater detail, the electric heater is provided close to the entrance of a purifying catalyst carrier. The detecting head of the oxygen sensor is disposed in a position close to the heating element of the electric heater. Heat generation by means of the energised electric heater permits the oxygen sensor to be heated simultaneously as the catalyst carrier, allowing the catalyst and the oxygen sensor to be activated at the same time.

JP 04 314 911 A discloses an exhaust pipe provided with a heater unit composed of a heater in which an oxygen sensor is assembled from the upstream of the pipe, and a main monorice catalyst. The heater unit is prepared by forming a hole on an outer peripheral part of a honeycomb heater made of a honeycomb structural body, and arranging the oxygen sensor having no heater such that its detection part is located in the hole.

### SUMMARY OF THE INVENTION

It is therefore an object of the present invention to provide an arrangement for reducing the emissions, and consequently for fulfilling law requirements relating to emissions in different countries.
Particularly, it is an object of the present invention to provide an arrangement for providing a substantially immediate operation of the oxygen sensor from the start-up of the internal combustion engine in a vehicle, and thereby a substantially immediate closed-loop-control of the oxygen sensor at the start-up. Alternatively, preheating of the oxygen sensor by means of the inventive arrangement could be an option. In this context, "preheating" means before the start-up of the internal combustion engine.

More particularly, it is an object to provide an arrangement for preventing the water drops to reach the sensor tip of the oxygen sensor provided inside the catalyst and thereby to prevent cracks in the sensor tip. In this way, the endurance and reliability of the oxygen sensors are improved.

These objects are achieved in accordance with the present invention by means of a vehicle comprising a heating arrangement, a catalyst and at least one oxygen sensor arranged inside the catalyst, the heating arrangement comprises a heating element being arranged to provide a heating effect on a part of the areas inside the catalyst,
as claimed in claim 1, wherein the heating effect of the heating element is applied adjacent a sensor tip of the oxygen sensor for heating a part of the substantially upstream areas of the catalyst surrounding the sensor tip. By means of the invention, substantially all moisture and water drops in the areas of the catalyst surrounding the sensor tip can be evaporated by means of the heating element of the inventive arrangement.

Preferably the heating element is arranged adjacent the sensor tip inside the catalyst. More preferably, the heating element is arranged in the catalyst such as into a hole, aperture or hollow of the material inside the catalyst. In another embodiment of the invention, the heating element is arranged in a bevel of the material inside the catalyst. In still another embodiment, the heating element is integrated within the material of the catalyst. Alternatively, the heating element is arranged outside the catalyst whereas the heat effect and thereby the heat of the heating element is conducted to the surfaces of the catalyst surrounding the sensor tip of the oxygen sensor provided inside the catalyst. Advantageously, the material of the catalyst is constituted of a substrate or a monolith.

The heating element is preferably constituted of any resistive element with the ability to operate in the operating temperatures of the catalyst. However, the heating element is preferably also constituted of an electrical coil in form of at least one electrically heated wire.

Alternatively, substantially all areas of the catalyst surrounding the sensor tip can be heated by means of the heating element of the inventive arrangement.

### BRIEF DESCRIPTION OF THE DRAWINGS

The invention will be described in the following by way of example only and with reference to the embodiments illustrated in the drawings, in which
- Fig. 1: shows a principal sketch of the emission after treatment system in a conventional vehicle,
- Fig. 2: shows a principal sketch of the inventive arrangement, and
- Fig. 3: shows a principal sketch of an embodiment of the inventive arrangement.

### DETAILED DESCRIPTION OF PREFERRED EMBODIMENTS

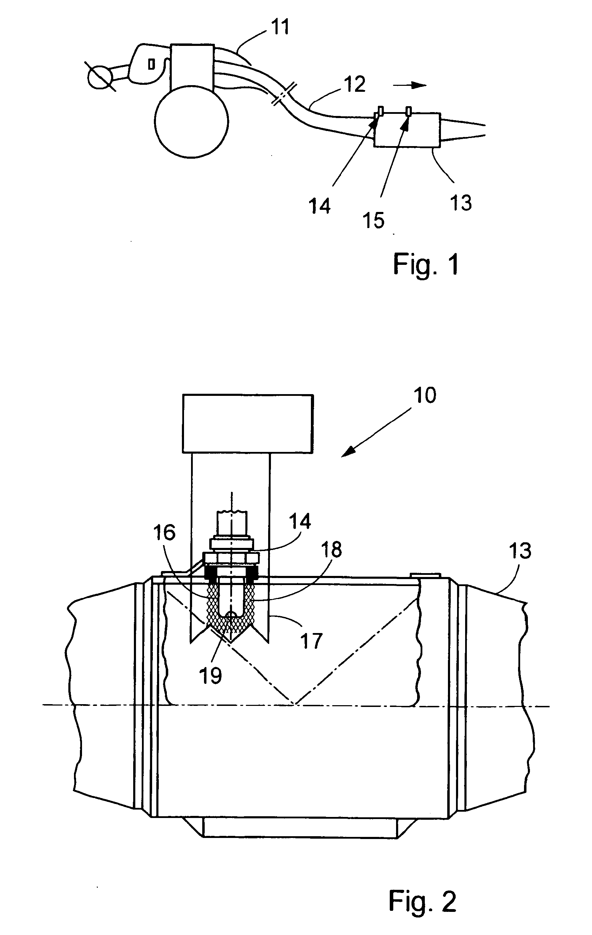

In the drawings, reference numeral 10 generally denotes a heating arrangement being arranged to heat the catalyst in a vehicle, see Fig. 2.

In conventional vehicles, the emission after treatment system comprises an exhaust manifold 11, a down-pipe 12 and a catalyst 13, see Fig. 1. In connection to the inventive arrangement, a first front oxygen sensor 14 is arranged inside the catalyst 13 adjacent the entrance thereof, or in the front part of the catalyst 13. A second rear oxygen sensor 15 is arranged in the rear part of the catalyst 13. Particularly, a sensor tip 16 of the oxygen sensor 14 is provided inside the catalyst 13, see Fig. 2. Hereinafter, the description relates to the front oxygen sensor 14 but can relate to any oxygen sensor 14 and 15 being arranged inside the catalyst 13.
In another embodiment, the front oxygen sensor 14 can be arranged in the down-pipe 12, and the second rear oxygen sensor 15 can then be arranged inside the catalyst 13.

In this context, "inside the catalyst" preferably means inside the catalytic material such as inside a catalytic monolith or a catalytic substrate arranged in the catalyst 13, which may or may not occupy the entire interior of the catalyst 13.

In a preferred embodiment of the invention, the heating arrangement 10 comprises a heating element 17 being arranged to heat the catalyst 13. The heating element 17 is arranged separately from the oxygen sensor 14 inside the catalyst 13. Furthermore, the heating element 17 is preferably provided adjacent, or in the vicinity of a sensor tip 16 of the oxygen sensor 14 for heating the areas of the catalyst 13 surrounding the sensor tip 16. Preferably, only the substantially upstream areas 18 of the catalyst 13 surrounding the sensor tip 16 with regard to the exhausts flowing through the catalyst 13 are heated. Then the moisture and water drops can be evaporated before the exhausts reach and pass the catalyst 13. In another preferred embodiment, a part of the area further upstream the catalyst 13 can be heated so that the moisture and water drops are evaporated and do not follow the exhaust flow further to the oxygen sensor 16. With "upstream areas" mean the areas in front of the oxygen sensor inside the catalyst 13 with respect to the exhaust flow direction, see Fig. 1.
However, the heating element 17 can be provided outside the catalyst 13 as well. Then the heating effect of the heating element 17 is preferably conducted into the catalyst 13.

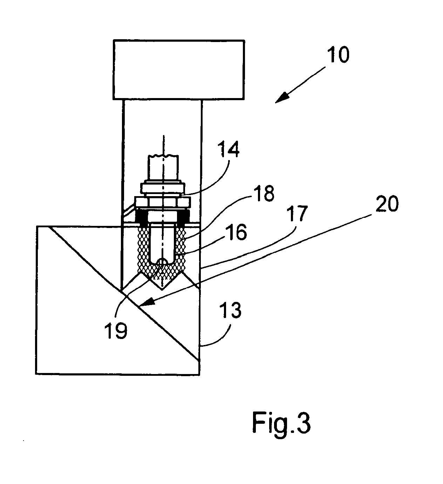

Preferably, the heating element 17 is arranged in a hole 19, aperture or hollow or the like provided inside the catalyst 13. Advantageously, the heating element 17 can be arranged in a bevel 20 provided in the catalyst 13 as well, see Fig. 3. In another embodiment of the invention, the heating element 17 can be integrated within the material of the catalyst 13. In still another embodiment, the heating element 17 can be arranged outside the catalyst 13 whereas the heat of the heating element 17 can be conducted into the catalyst 13 and further on to the areas 18 surrounding the sensor tip 16 of the oxygen sensor 14.

Preferably, the heating element 17 is constituted of any resistive material having the ability to work in the operating temperatures of the catalyst 13. The heating element 17 can be constituted of an electrical coil of at least one heated wire.

The inventive heating arrangement 10 operates according to the following. As soon as the internal combustion engine of the vehicle has started, the upstream areas 18 of the catalyst 13 surrounding the sensor tip 16 are electrically heated by means of the heating element 17. In this way, condensed water drops and moisture existing inside the catalyst 13, and the condensed water drops and moisture following the exhausts into the catalyst 13, will evaporate before reaching and colliding with the sensor tip 16 of the oxygen sensor 14. As a consequence, the actual oxygen sensor 14 comprising the sensor tip 16 is heated by means of thermal conduction. Thus, the heated areas 18 of the catalyst 13 surrounding the sensor tip 16 of the oxygen sensor 14, i.e. preferably comprising the heated areas 18 of the catalyst 13 directly contacting the sensor tip 16, work as a protecting shield for the sensor tip 16 against moisture and water drops. In this way, the risks for thermal chock and cracks in the sensor tip 16 are reduced.

In a preferred alternative embodiment of the invention, the areas 18 of the catalyst 13 surrounding the sensor tip 16 can be preheated by means of the heating element 17 before the start-up of the internal combustion engine of the vehicle.

An oxygen sensor 14 being arranged with the inventive arrangement 10 can also be provided with an internal heating element so that the sensor 14 is provided with both an internal and an external heating element 17.

Consequently, the closed-loop control of the oxygen sensor 14 can start much earlier, even at the start-up of the internal combustion engine, due to the inventive arrangement. In this way, the emissions can be reduced.

The invention has been described above and illustrated in the drawings by way of example only and the skilled person will recognize that various modifications may be made without departing from the scope of the invention as defined by the appended claims.

## Claims

1. A vehicle comprising a heating arrangement (10), a catalyst (13) and at least one oxygen sensor (14) arranged inside the catalyst (13), the heating arrangement (10) comprising a heating element (17) being arranged to provide a heating effect on at least a part of the areas inside the catalyst (13), wherein the heating element (17) is provided adjacent a sensor tip (16) of the oxygen sensor (14), the heating effect of the heating element (17) is applied adjacent the sensor tip (16) for heating a part of the substantially upstream areas (18) of the catalyst (13) surrounding the sensor tip (16),
**characterized in that** the vehicle comprises a second rear oxygen sensor (15) arranged inside the catalyst (13).

2. The vehicle as claimed in claim 1,
**characterised in that** the heating element (17) is arranged adjacent the sensor tip (16) inside the catalyst (13).

3. The vehicle as claimed in claim 1 or 2,
**characterised in that** the heating element (17) is arranged in a hole (19), aperture or hollow of the catalyst (13).

4. The vehicle as claimed in claim 1 or 2,
**characterised in that** the heating element (17) is arranged in a bevel (20) of the catalyst (13).

5. The vehicle as claimed in claim 1 or 2,
**characterised in that** the heating element (17) is integrated with the material of the catalyst (13).

6. The vehicle as claimed in claim 1,
**characterised in that** the heating element (17) is arranged outside the catalyst (13).

7. The vehicle according to anyone of the preceding claims,
**characterised in that** the heating element (17) comprises any resistive element with the ability to operate in the operating temperatures of the catalyst (13).

8. The vehicle as claimed in claims 1 - 4, 6 - 7,
**characterised in that** the heating element (17) comprises an electrical coil in form of at least one electrically heatable wire.

## Patentansprüche

1. Fahrzeug, das eine Heizanordnung (10), einen Katalysator (13) und wenigstens einen Sauerstoffsensor (14), der in dem Katalysator (13) angeordnet ist, umfasst, wobei die Heizanordnung (10) ein Heizelement (17) umfasst, das dazu ausgelegt ist, wenigstens in einem Teil der Bereiche innerhalb des Katalysators (13) eine Heizwirkung zu schaffen, wobei das Heizelement (17) in der Nähe einer Sensorspitze (16) des Sauerstoffsensors (14) vorgesehen ist, wobei die Heizwirkung des Heizelements (17) in der Nähe der Sensorspitze (16) ausgeübt wird, um einen Teil der im Wesentlichen stromaufseitigen Bereiche (18) des Katalysators (13), die die Sensorspitze (16) umgeben, zu erwärmen,
**dadurch gekennzeichnet, dass** das Fahrzeug einen zweiten, hinteren Sauerstoffsensor (15), der in dem Katalysator (13) angeordnet ist, umfasst.

2. Fahrzeug nach Anspruch 1,
**dadurch gekennzeichnet, dass** das Heizelement (17) in dem Katalysator (13) in der Nähe der Sensorspitze (16) angeordnet ist.

3. Fahrzeug nach Anspruch 1 oder 2,
**dadurch gekennzeichnet, dass** das Heizelement (17) in einem Loch (19), einer Öffnung oder einem Hohlraum des Katalysators (13) angeordnet ist.

4. Fahrzeug nach Anspruch 1 oder 2,
**dadurch gekennzeichnet, dass** das Heizelement (17) in einem schrägen Teil (20) des Katalysators (13) angeordnet ist.

5. Fahrzeug nach Anspruch 1 oder 2,
**dadurch gekennzeichnet, dass** das Heizelement (17) in das Material des Katalysators (13) integriert ist.

6. Fahrzeug nach Anspruch 1,
**dadurch gekennzeichnet, dass** das Heizelement (17) außerhalb des Katalysators (13) angeordnet ist.

7. Fahrzeug nach einem der vorhergehenden Ansprüche,
**dadurch gekennzeichnet, dass** das Heizelement (17) irgendein resistives Element enthält, das die Fähigkeit besitzt, bei den Betriebstemperaturen des Katalysators (13) zu arbeiten.

8. Fahrzeug nach den Ansprüchen 1-4, 6-7,
**dadurch gekennzeichnet, dass** das Heizelement (17) eine elektrische Spule in Form wenigstens eines elektrisch heizbaren Drahts enthält.

## Revendications

1. Véhicule comportant un dispositif (10) de chauffage, un catalyseur (13) et au moins un capteur (14) d'oxygène disposé à l'intérieur du catalyseur (13), le dispositif (10) de chauffage comportant un élément chauffant (17) disposé de façon à produire un effet de chauffage sur au moins une partie des zones situées à l'intérieur du catalyseur (13), l'élément chauffant (17) étant placé à proximité d'une pointe (16) de capteur du capteur (14) d'oxygène, l'effet de chauffage de l'élément chauffant (17) étant appliqué à proximité de la pointe (16) de capteur pour chauffer une partie des zones (18) sensiblement amont du catalyseur (13) entourant la pointe (16) de capteur,
**caractérisé en ce que** le véhicule comporte un deuxième capteur arrière (15) d'oxygène disposé à l'intérieur du catalyseur (13).

2. Véhicule selon la revendication 1,
**caractérisé en ce que** l'élément chauffant (17) est disposé à proximité de la pointe (16) de capteur à l'intérieur du catalyseur (13).

3. Véhicule selon la revendication 1 ou 2,
**caractérisé en ce que** l'élément chauffant (17) est disposé dans un trou (19), une ouverture ou un évidement du catalyseur (13).

4. Véhicule selon la revendication 1 ou 2,
**caractérisé en ce que** l'élément chauffant (17) est disposé dans un chanfrein (20) du catalyseur (13).

5. Véhicule selon la revendication 1 ou 2,
**caractérisé en ce que** l'élément chauffant (17) est intégré au matériau du catalyseur (13).

6. Véhicule selon la revendication 1, **caractérisé en ce que** l'élément chauffant (17) est disposé à l'extérieur du catalyseur (13).

7. Véhicule selon l'une quelconque des revendications précédentes,
**caractérisé en ce que** l'élément chauffant (17) comporte un élément résistif quelconque apte à fonctionner sous les températures de fonctionnement du catalyseur (13).

8. Véhicule selon les revendications 1 à 4, 6 à 7,
**caractérisé en ce que** l'élément chauffant (17) comporte une bobine électrique sous la forme d'au moins un fil susceptible d'être chauffé électriquement.
